# EUROPÄISCHE PATENTANMELDUNG

(11) **EP 3 865 431 A1**
(43) Veröffentlichungstag der Anmeldung: **18.08.2021**
(21) Anmeldenummer: 21151508.5
(22) Anmeldetag: 14.01.2021
(51) Int. Cl.: B65G 19/02, B65G 47/28

(54) **HALTEELEMENT ZUM HALTENDEN FÖRDERN EINES GEGENSTANDS ENTLANG EINER FÖRDERSCHIENE UND HÄNGEFÖRDERANLAGE MIT EINER FÖRDERSCHIENE UND DERARTIGEN HALTEELEMENTEN**

(30) Priorität: 13.02.2020 DE 102020201828
(71) Anmelder: Dürkopp Fördertechnik GmbH, 33719 Bielefeld (DE)
(72) Erfinder: Wend, Michael, 33619 Bielefeld (DE); Johannesmann, Thomas, 33719 Bielefeld (DE)
(74) Vertreter: Rau, Schneck & Hübner Patentanwälte Rechtsanwälte PartGmbB

(57) **Zusammenfassung**

Ein Halteelement zum haltenden Fördern eines Gegenstands entlang einer Förderschiene (2) umfasst ein eine Breite (b) aufweisendes Tragteil (8) mit einem Mitnahmeelement zum Mitnehmen des Tragteils (8) von einem Antriebselement und mit einer Aufnahme (13) zum Aufnehmen des zu fördernden Gegenstands, sowie einen schwenkbar an dem Tragteil (8) angelenkten Abstandshebel (19), der zwischen einer Ruheposition, in der der Abstandshebel (19) innerhalb der Breite (b) des Tragteils (8) angeordnet ist, und einer Arbeitsposition verlagerbar ist, in der der Abstandshebel (19) in Breitenrichtung des Tragteils (8) vorsteht.

## Beschreibung

Der Inhalt der deutschen Patentanmeldung DE 10 2020 201 828.6 wird durch Bezugnahme hierin aufgenommen.

Die Erfindung betrifft ein Halteelement zum haltenden Fördern eines Gegenstands entlang einer Förderschiene sowie eine Hängeförderanlage mit einer Förderschiene und derartigen Halteelementen.

DE 10 2010 053 590 B4 offenbart eine Förderanlage für Tragetaschen. Um ein geordnetes Aufstauen von beladenen Tragetaschen zu ermöglichen, sodass in den Tragetaschen gefördertes Fördergut weitgehend von Staukräften freigehalten ist, ist vorgesehen, an der Tragetasche einen Abstandshalter vorzusehen, der zwischen einer Aufhängestelle der Tragetasche und dem Taschenbeutel angeordnet ist.

Es ist eine Aufgabe der vorliegenden Erfindung, das geordnete Aufstauen von beladenen Tragetaschen zu verbessern.

Die Aufgabe ist erfindungsgemäß gelöst durch ein Halteelement mit den im Anspruch 1 angegebenen Merkmalen sowie durch eine Hängeförderanlage mit den in Anspruch 12 angegebenen Merkmalen.

Erfindungsgemäß wurde erkannt, dass ein verbessertes Aufstauen von beladenen Tragetaschen möglich ist, wenn ein Abstandshebel nicht an der Tragetasche, sondern an einem Halteelement angeordnet ist. Insbesondere ist der Abstandshebel Bestandteil des Halteelements. Ein Halteelement ist insbesondere ein Rolladapter, wie er grundsätzlich aus der DE 10 2005 006 455 A1 bekannt ist. Das Halteelement dient zum haltenden Fördern eines Gegenstands, insbesondere einer Tragetasche, entlang einer Förderschiene. Das Halteelement ermöglicht aber auch ein haltendes Fördern mehrerer Gegenstände, insbesondere mehrerer Tragetaschen.

Das Halteelement umfasst ein eine Breite aufweisendes Tragteil. Die Breite erstreckt sich insbesondere in Förderrichtung des Halteelements. Die Förderrichtung wird insbesondere durch die Förderschiene vorgegeben, entlang der das Halteelement gefördert wird. Das Tragteil ist insbesondere einteilig ausgeführt. Das Tragteil weist ein Mitnahmeelement auf. Das Mitnahmelement ist insbesondere in einem Bereich des oberen Endes des Tragteils angeordnet. Insbesondere ist das Mitnahmelement im Betrieb der Hängeförderanlage innerhalb der Förderschiene angeordnet, um mit dem Antriebselement mechanisch zusammen zu wirken. Das Mitnahmeelement dient zum Mitnehmen des Tragteils von einem Antriebselement, insbesondere einer Antriebskette. Das Antriebselement ist insbesondere in und/oder an der Förderschiene einer Hängeförderanlage angeordnet, in und/oder an der Förderschiene befestigt und/oder darin integriert. Das Tragteil weist ferner eine Aufnahme auf. Die Aufnahme dient zum Aufnehmen des zu fördernden Gegenstands. Die Aufnahme ist insbesondere als Aufnahmeöffnung ausgeführt. Die Aufnahme ist insbesondere in einem Bereich eines unteren Endes des Tragteils angeordnet. Als unteres Ende des Tragteils wird der Bereich verstanden, der der Förderschiene abgewandt ist, wenn das Halteelement zum haltenden Fördern an der Förderschiene angeordnet ist. Das untere Ende des Tragteils bildet insbesondere einen unteren Abschluss des Tragteils.

Der Abstandshebel ist an dem Tragteil schwenkbar angelenkt. Insbesondere ist der Abstandshebel um eine Schwenkachse schwenkbar angelenkt. Die Schwenkachse ist insbesondere parallel zu einer Rollenachse orientiert. Um die Rollenachse können eine oder mehrere Rollen drehbar an dem Tragteil gelagert angeordnet sein, um ein Abrollen des Halteelements entlang der Förderschiene zu ermöglichen. Ein Verlagern des Halteelements entlang der Förderschiene in der Förderrichtung ist durch Abrollen und somit mit reduziertem Kraftaufwand sichergestellt. Der Abstandshebel ist zwischen einer Ruheposition und einer Arbeitsposition verlagerbar, insbesondere klappbar. Die Ruheposition ist eine Standardposition. Die Arbeitsposition ist eine Abstandsposition. In der Ruheposition ist der Abstandshebel innerhalb der Breite des Tragteils angeordnet. Das bedeutet, dass der Abstandshebel in Breitenrichtung des Tragteils nicht vorsteht. Die Standardposition kennzeichnet den typischerweise vorliegenden Normalzustand des Abstandshebels. In der Standardposition ermöglicht das Halteelement ein platzsparendes Fördern und Anordnen der zu fördernden Gegenstände. Es ist insbesondere denkbar, dass die Breite des Tragteils mit dem Abstandshebel in der Standardposition kleiner ist als die Breite des zu fördernden Gegenstands. Insbesondere können sich Gegenstände unterschiedlicher Dicken in Förderrichtung der Förderschiene ausgleichen. Die Breitenrichtung des Tragteils und des Gegenstands sind jeweils parallel zu der von der Förderschiene vorgegebenen Förderrichtung orientiert. In der Arbeitsposition steht der Abstandshebel in Breitenrichtung des Tragteils vor. Die Abstandsposition stellt einen Nicht-Normalzustand des Halteelements dar. Der Nicht-Standardzustand tritt im Betrieb einer Hängeförderanlage nur ausnahmsweise und insbesondere im Einzelfall auf. Mit der Abstandsposition kann der Abstand zwischen zwei benachbarten Halteelementen zuverlässig und auf einen festlegbaren Abstand eingestellt werden.

Dadurch, dass der Abstandshebel am Tragteil angelenkt ist, ist gewährleistet, dass benachbarte Halteelemente in einer Stauanordnung mit einem definierten Abstand zueinander angeordnet sind. Ein Auflaufen und insbesondere ein Übereinanderschieben einzelner Halteelemente in der Förderschiene ist dadurch zuverlässig ausgeschlossen. Der Abstandshebel wirkt unmittelbar dort, wo die Halteelemente manipuliert werden, also mit der Förderkraft zum Fördern der Halteelemente beaufschlagt werden. Der erfindungsgemäße Abstandshebel wirkt unmittelbar, also direkt.

Eine Ausführung des Abstandshebels gemäß Anspruch 2 ermöglicht eine zuverlässige Sicherstellung des Abstands zwischen zwei benachbarten Halteelementen, insbesondere zwischen zwei benachbarten Gegenständen. Insbesondere ist der Abstandshebel in der Ruheposition und in der Arbeitsposition jeweils selbstsichernd am Tragteil angeordnet. Ein unbeabsichtigtes Verlagern des Abstandshebels aus der Ruheposition oder aus der Arbeitsposition ist zuverlässig verhindert.

Ein Kraftspeicherelement gemäß Anspruch 3 vereinfacht die zuverlässige Anordnung des Abstandshebels in die Ruheposition und in die Arbeitsposition. Insbesondere ist das Kraftspeicherelement schwenkbar an dem Abstandshebel und/oder schwenkbar an dem Tragteil angelenkt.

Ein Federelement als Kraftspeicherelement gemäß Anspruch 4 ermöglicht eine unkomplizierte Ausführung des Halteelements. Insbesondere ermöglicht das Federelement eine jeweils zuverlässige Überführung des Abstandshebels in die Ruheposition und in die Arbeitsposition.

Alternativ kann der Abstandshebel mit Kraftspeicherelement als Sicherungsbolzen mit Federring oder als Klappsplint ausgeführt sein. Das Umklappen des Abstandshebels von der Standardposition in die Abstandsposition und zurück ist dadurch vereinfacht. Sicherungsbolzen mit Federring oder Klappsplinte stehen als standardisierte, insbesondere genormte Bauteile kostengünstig zur Verfügung. Die Ausführung eines derartigen Halteelements ist unkompliziert und kosteneffektiv. Die Kraftspeicherfunktion ist bei dem Sicherungsbolzen mit Federring oder bei dem Klappsplint inhärent vorhanden, also impliziert. Zusätzliche Bauteile werden vermieden. Die Gesamtzahl der Bauteile ist reduziert.

Eine Anordnung des Federelements gemäß Anspruch 5 vereinfacht die selbstsichernde Anordnung des Abstandshebels.

Eine Ausgestaltung des Halteelements gemäß Anspruch 6 ist konstruktiv unaufwändig.

Mindestens eine drehbare Rolle gemäß Anspruch 7 ermöglicht die Förderung des Halteelements entlang der Förderschiene mit reduziertem Kraftaufwand.

Die Ausführung der Aufnahme gemäß Anspruch 8 ist unkompliziert und zuverlässig. Ein unbeabsichtigtes Lösen des geförderten Gegenstands von dem Halteelement ist ausgeschlossen. Die Öffnung der Aufnahme ist im Wesentlichen senkrecht zur Förderrichtung orientiert. Es ist alternativ denkbar, dass die Aufnahme als rahmenartige Öffnung ausgeführt ist, wobei der Rahmen entlang seines Umfangs zumindest eine Unterbrechung aufweisen kann. Der Rahmen ist dann offen ausgeführt.

Ein Identifikationsmittel gemäß Anspruch 9 dient zur besseren Nachverfolgung des Halteelements und insbesondere des mittels des Halteelements geförderten Gegenstands in der Hängeförderanlage.

Eine Anlagefläche gemäß Anspruch 10 verbessert ein kontrolliertes Anliegen eines benachbarten Halteelements. Die Anlagefläche dient zum Anliegen des Abstandshebels eines benachbarten Halteelements. Die Anlagefläche weist insbesondere eine Kontur auf, die mit einer Kontur des Abstandshebels des benachbarten Halteelements in einem freien Endabschnitt korrespondiert.

Die Ausführung des Abstandshebels gemäß Anspruch 11 verbessert das definierte Anliegen des Abstandshebels an einem benachbarten Halteelement.

Eine Hängeförderanlage gemäß Anspruch 12 weist im Wesentlichen die Vorteile der Halteelemente auf, worauf hiermit verwiesen wird. Bei der Hängeförderanlage ist ein sicheres und definiertes Aufstauen von Gegenständen, insbesondere von Tragetaschen sichergestellt. Es ist insbesondere ausgeschlossen, dass eine Staukraft, die aufgrund unzureichenden Abstands benachbarter Tragetaschen wirkt, dazu führt, dass die Halteelemente sich in der Förderschiene entlang der Förderrichtung überlappen. Die Hängeförderanlage gewährleistet ein störungsfreies Aufstauen und wieder Weiterfördern der Halteelemente und der daran haltend geförderten Gegenstände.

Eine Öffnungsstation gemäß Anspruch 13 vereinfacht das Verlagern des Abstandshebels in die Abstandsposition. Insbesondere ermöglicht die Öffnungsstation ein unkompliziertes und unmittelbares Umklappen des Abstandshebels in die Abstandsposition. Insbesondere wird der Abstandshebel während seiner Förderung entlang der Förderrichtung durch Zusammenwirken mit einem Öffnungselement der Öffnungsstation automatisch, insbesondere aus der Standardposition, in die Abstandsposition überführt. Das Öffnungselement ist insbesondere ein statisches Element. Das Öffnungselement wirkt passiv. Das Öffnungselement ist insbesondere als ortsfeste Kufe ausgeführt. Das Öffnungselement ist insbesondere im Bereich der Förderschiene angeordnet und insbesondere an der Förderschiene befestigt. Die Befestigung des Öffnungselements der Förderschiene kann integral oder mittels mindestens eines Befestigungselements wie Befestigungsschrauben erfolgen.

Eine Schließstation gemäß Anspruch 14 ermöglicht ein unkompliziertes Verlagern des Abstandshebels, also die Überführung des Abstandshebels, insbesondere aus der Abstandsposition, in die Standardposition. Insbesondere erfolgt das Überführen des Abstandshebels in die Schließposition automatisch durch Zusammenwirken des Abstandshebels mit einem Schließelement während der Förderung des Abstandshebels entlang der Förderrichtung. Das Schließelement ist insbesondere ein statisches Element. Das Schließelement wirkt passiv. Das Schließelement ist insbesondere in der Hängeförderanlage ortsfest ausgeführt. Das Schließelement ist insbesondere eine ortsfeste Kufe. Das Schließelement ist insbesondere im Bereich der Förderschiene angeordnet und insbesondere an der Förderschiene befestigt. Die Befestigung des Schließelements an der Förderschiene kann integral oder mittels eines Befestigungselements wie Schrauben erfolgen.

Sowohl die in den Patentansprüchen angegebenen Merkmale als auch die in dem nachfolgenden Ausführungsbeispiel des erfindungsgemäßen Halteelements angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine perspektivische Ausschnittsdarstellung einer Förderschiene einer Hängeförderanlage mit mehreren erfindungsgemäßen Halteelementen,
- Fig. 2: eine Fig. 1 entsprechende Seitenansicht,
- Fig. 3: eine Fig. 2 entsprechende Seitenansicht eines Halteelements mit einem Abstandshebel in einer Arbeitsposition,
- Fig. 4: eine vergrößerte Detailansicht des Details IV in Fig. 3,
- Fig. 5: eine Fig. 3 entsprechende Ansicht des Halteelements mit dem Abstandshebel in einer Ruheposition,
- Fig. 6: eine vergrößerte Detailansicht des Details VI in Fig. 5,
- Fig. 7: eine Fig. 2 entsprechende Darstellung mit mehreren, benachbart zueinander angeordneten Halteelementen mit den Abstandshebeln in der Ruheposition,
- Fig. 8 bis 12: schematische Seitenansichten einer Öffnungsstation der Hängeförderanlage,
- Fig. 13 bis 17: schematische Seitenansichten einer Schließstation der Hängeförderanlage.

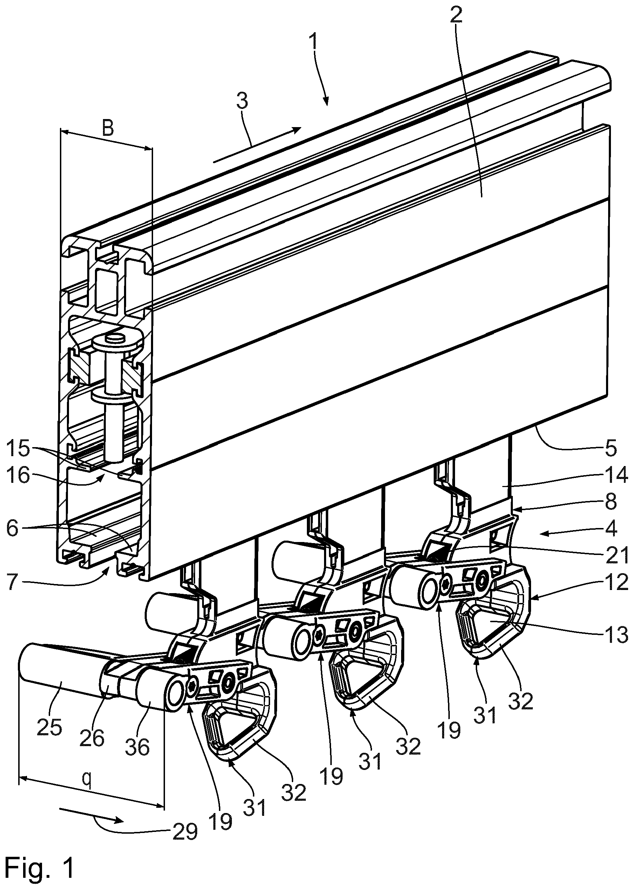

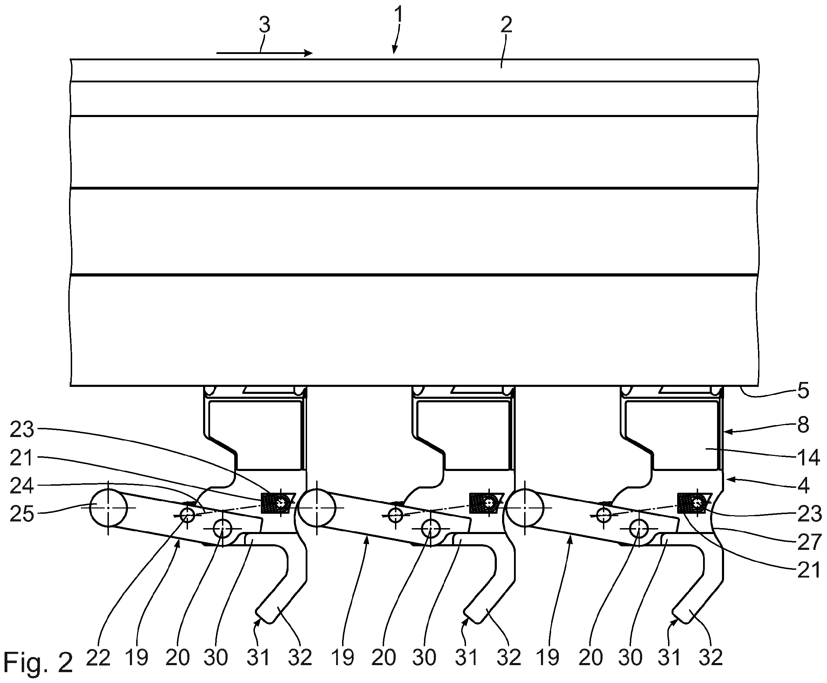

Eine in Fig. 1 bis 7 nicht näher dargestellte Hängeförderanlage 1 umfasst mindestens eine Förderschiene 2, die eine Förderrichtung 3 vorgibt. Je nach Ausgestaltung der Förderschiene 2 ist die Förderrichtung 3 zumindest abschnittsweise linear. Die Förderrichtung 3 kann zumindest abschnittsweise eine Krümmung aufweisen. Insbesondere kann die Förderrichtung 3 gegenüber der Horizontalen zumindest abschnittsweise nach oben oder nach unten geneigt oder gekrümmt ausgeführt sein, um Höhenunterschiede in der Hängeförderanlage 1 zu überwinden.

Die Förderschiene 2 ist als Hohlkastenprofil ausgebildet. In der Förderschiene 2 ist ein nicht dargestelltes Antriebselement in Form einer Antriebskette angeordnet, die mittels nicht dargestellter Antriebsmittel entlang der Förderrichtung 3 antreibbar ist. Die Antriebskette kann insbesondere in Form einer sogenannten Rollenkette ausgeführt sein, die Rollen aufweist, die in geringem Abstand voneinander mittels Verbindungslaschen miteinander verbunden sind. Die rollenverbindenden Bolzen können nach unten vorstehende, als Mitnehmer dienende bolzenförmige Verlängerungen aufweisen. Die Bolzen mit den Mitnehmern verlaufen normal zur Förderschiene 2 in einer durch die Förderrichtung 3 aufgespannten Vertikalebene. Die Antriebskette ist in Richtung der Bolzen, also senkrecht und quer zur Förderrichtung 3 in der Förderschiene 2 geführt und gehalten.

Bezüglich des Aufbaus und der Funktion der Antriebskette wird ausdrücklich auf die DE 10 2005 006 455 A1 verwiesen.

Weiterhin sind Halteelemente 4 vorgesehen, die mittels des Antriebselements in der Förderschiene 2 entlang der Förderrichtung 3 bewegbar sind.

An einer Unterseite 5 der Förderschiene 2 sind zwei aufeinander zugerichtete Führungsstege 6 ausgebildet, zwischen denen sich in Förderrichtung 3 der Förderschiene 2 ein Schlitz 7 erstreckt. Der Schlitz 7 ist in einer Richtung quer und insbesondere senkrecht zur Förderrichtung 3 durch die beiden Führungsstege 6 begrenzt.

Durch den Schlitz 7 ragt ein flaches Tragteil 8 jedes Halteelements 4 nach unten aus der Förderschiene 2 heraus. Im Bereich seines oberen Endes 9 weist das Halteelement 4 beiderseits des Tragteils 8 je eine Laufrolle 10 auf, die um eine Drehachse 11 am Tragteil 8 drehbar gelagert sind. Die Laufrollen 10 sind entlang der Förderrichtung 3 in der Förderschiene 2 verlagerbar. Insbesondere sind die Laufrollen 10 jeweils auf einem der Führungsstege 6 abgestützt. Es ist also nur ein Paar von Laufrollen 10 vorhanden, wobei die Drehachse 11 für beide Laufrollen 10 identisch ist. Das Halteelement 4 kann um die Drehachse 11 in der Förderschiene 2 pendeln.

Das Tragteil 8 weist im Bereich eines unteren Endes 12 eine Aufnahme 13 auf, in die ein Haken eines Gegenstands, insbesondere einer Tragetasche oder eines Kleiderbügels einhängbar ist. Dadurch ist der Gegenstand an dem Halteelement 4 zuverlässig und unverlierbar gehalten. Das Halteelement 4 dient zum haltenden, insbesondere hängenden, Fördern des Gegenstands. Die Aufnahme 13 ist als geschlossene Aufnahmeöffnung ausgeführt. Die äußere Kontur der Aufnahmeöffnung ist im Wesentlichen dreieckförmig. Es sind auch andere Konturen denkbar. Insbesondere ist auch eine offene Kontur der Aufnahmeöffnung möglich. Die Aufnahme 13 ist gegenüber einer senkrecht zur Förderrichtung 3 orientierten Vertikalebene mit einem Neigungswinkel n geneigt angeordnet.

Das Halteelement 4 weist ein Identifizierungselement 14 auf, bei dem es sich um einen Transponder, insbesondere einen RFID-Chip, einen Barcode und/oder einen Strichcode handelt. Das Identifizierungselement 14 verläuft entsprechend der Anordnung des plattenartigen Tragteils 8 in Förderrichtung 3, liegt also mit seiner Hauptfläche offen quer zur Förderrichtung 3, also zur Seite hin. Es ist damit über ein Identifizierungsgerät eindeutig erfassbar, da es nicht in Überdeckung mit anderen Identifizierungselementen 14 kommt.

Ein zu transportierender Gegenstand bleibt nach dem Einhängen in das Halteelement 4 während des gesamten Transportvorgangs an diesem Halteelement 4 und ist mit diesem also gleichsam "verheiratet". Der zu transportierende Gegenstand wird über das Identifizierungselement 14 und damit das Halteelement 4 gesteuert. Da der gesamte Transport von der Antriebskette her erfolgt, ist es vorteilhaft, wenn das Halteelement 4 während des Transports eine absolut eindeutige Position relativ zur Antriebskette einnimmt. Zur Erzielung dieses Effekts dienen die folgenden Maßnahmen:

Die Förderschiene 2 weist oberhalb der Laufrollen 10 auf einander zugerichtete horizontale Begrenzungsstege 15, die zwischen sich einen Schlitz 16 begrenzen. Durch diesen Schlitz 16 erstreckt sich ein stielartiger Ansatz 17 des Halteelements 4 der einstückig mit dem Tragteil 8 an dessen oberen Ende 9 ausgebildet ist. Am oberen Ende des stielartigen Ansatzes 17 ist ein Anschlag 18 in Form eines Querriegels ausgebildet, dessen Erstreckung horizontal quer zur Förderrichtung 3 größer ist als die Breite des Schlitzes 16, sodass bei einem Neigen des Halteelements 4 gegenüber der Förderschiene 2 der Anschlag 18 zur Anlage auf den Begrenzungsstegen 15 kommt und somit eine weitere Neigung des Halteelements 4 verhindert ist. Der Ansatz 17 und der Anschlag 18 haben die Grundform eines Hammers.

Die Mitnehmer der Antriebskette erstrecken sich bis unmittelbar oberhalb der Begrenzungsstege 15, sodass ein zwischen zwei Mitnehmern befindliches Halteelement 4, immer zuverlässig mitgenommen wird, also nicht außer Eingriff mit dem Mitnehmer kommt. Insbesondere kommen zwei benachbarte Halteelemente 4 in ihrer stärkst geneigten Stellung nicht zur Anlage aneinander. In diesem Zusammenhang ist darauf hinzuweisen, dass benachbarte Halteelemente 4 mindestens in doppeltem Abstand zweier benachbarter Mitnehmer in der Förderschiene 2 angeordnet sind. Um dies sicherzustellen, ist eine Breite b der Halteelemente 4 in Förderrichtung 3 größer als ein Mittenabstand benachbarter Mitnehmer der Antriebskette.

An dem Tragteil 8 ist ein Abstandshebel 19 um eine Schwenkachse 20 schwenkbar angelenkt. Die Schwenkachse 20 ist insbesondere parallel zur Drehachse 11 orientiert. Zwischen dem Tragteil 8 und dem Abstandshebel 19 ist ein Kraftspeicherelement 21 in Form einer Schraubenfeder angeordnet. Das Kraftspeicherelement 21 ist an einem ersten Anlenkpunkt 22 an dem Abstandshebel 19 schwenkbar angelenkt. Das Kraftspeicherelement 21 ist an einem zweiten Anlenkpunkt 23 schwenkbar an dem Tragteil 8 angelenkt. Die Wirkungslinie des Kraftspeicherelements ist als Strichpunkt-Linie 24 symbolisiert.

Im Bereich der Schwenkachse 20 umgreift der Abstandshebel 19 das Tragteil 8 beidseitig entlang der Schwenkachse 20. Der Abstandshebel 19 ist in diesem Bereich laschenartig ausgeführt. An einem der Schwenkachse 20 abgewandten freien Endbereich 25 ist der Abstandshebel 19 im Wesentlichen rohrförmig ausgeführt. Insbesondere weist der Abstandshebel 19 entlang der Schwenkachse 20 in dem freien Endbereich 25 eine Quererstreckung q auf, die größer ist als die Breite B der Förderschiene 2. Der Abstandshebel 19 ragt seitlich unterhalb der Förderschiene 2 in Richtung der Schwenkachse 20 vor.

An dem Endbereich 25 des Abstandshebels 19 ist eine Kontaktfläche 26 vorgesehen, die zum Anliegen des Abstandshebels 19 an einem benachbarten Halteelement liegt.

Das Tragteil 8 weist im Bereich des unteren Endes 12 eine Anlagefläche 27 auf. Die Anlagefläche 27 dient zum Anliegen eines Abstandshebels 19 eines benachbarten Halteelements 4, insbesondere des in Förderrichtung 3 stromaufwärts angeordneten Halteelements 4, also des nacheilenden Halteelements 4. Gemäß dem gezeigten Ausführungsbeispiel ist die Anlagefläche 27 als muldenförmige Vertiefung an einer, insbesondere in Förderrichtung 3 vorne liegende, Außenseite des Tragteils 8 ausgeführt. Die Kontur der Anlagefläche kann auch in einer anderen Form ausgeführt sein. Wesentlich ist, dass die jeweilige Außenkontur der Kontaktfläche 26 und der Anlagefläche 27 zueinander korrespondieren, sodass der Abstandshebel 19 eines Halteelements 4 in der Anlagefläche 27 des benachbarten Halteelements 4 zuverlässig und sicher angeordnet ist.

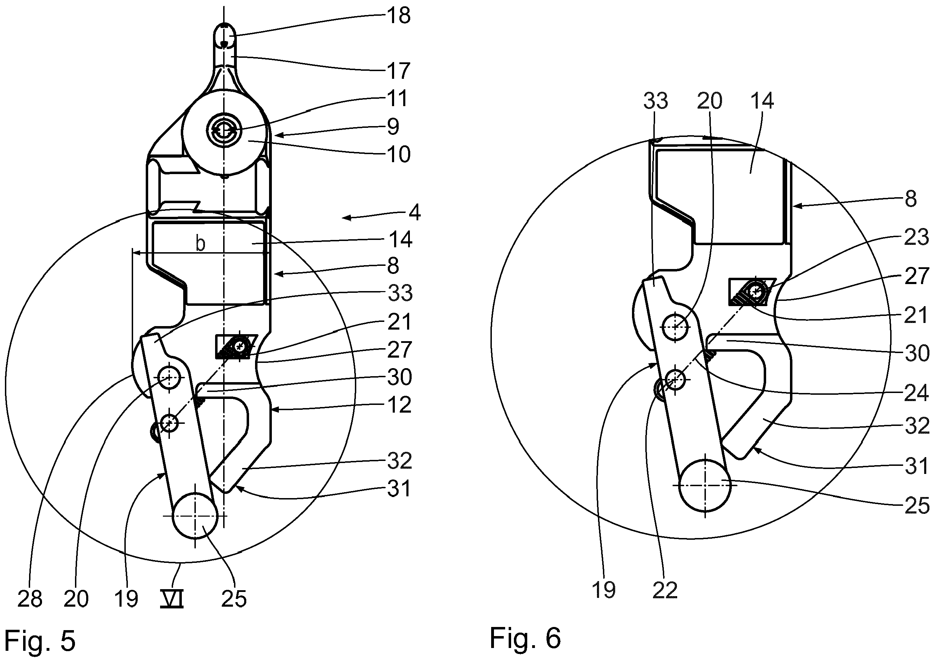

Der Abstandshebels 19 kann zwischen einer Arbeitsposition gemäß Fig. 1 bis 4 und einer Transportposition gemäß Fig. 5 bis 7 verlagert, insbesondere verschwenkt werden.

In der Arbeitsposition ragt der Abstandshebel 19 in Breitenrichtung an dem Tragteil 8 vor. In der Arbeitsposition ist der Abstandshebel im Wesentlichen parallel zur Förderrichtung 3 orientiert. Im Wesentlichen parallel heißt, dass eine Winkelabweichung von höchstens +/- 15°, insbesondere von höchstens +/- 10° und insbesondere von höchstens +/- 5° gegenüber der Förderrichtung 3 möglich ist. Insbesondere beträgt die Winkelabweichung höchstens +/- 2° und ist insbesondere exakt parallel. In der Arbeitsposition ist der Abstandshebel 19 mit dem Endbereich 25 maximal beabstanded von einem zweiten Anschlagelement 31 angeordnet. In der Arbeitsposition liegt der Abstandshebel 19 mit einem einteilig angeformten Überstandsabschnitt 33 an einem ersten Anschlagelement 30 an. Der Überstandsabschnitt 33 ist an einem dem Endbereich 25 des Abstandshebels 19 gegenüber liegenden Ende angeordnet. Das zweite Anschlagelement 31 ist insbesondere einteilig mit einem die Aufnahme 13 umgebenden Rahmen 32 ausgeführt.

In der Ruheposition ist der Abstandshebel 19 im Wesentlichen senkrecht zur Förderrichtung 3 orientiert. Im Wesentlichen senkrecht bedeutet, dass der Winkel, mit dem der Abstandshebel 19 in der Ruheposition gegenüber der Förderrichtung 3 angeordnet ist, zwischen 80° und 120°, insbesondere zwischen 85° und 115°, insbesondere zwischen 87° und 113°, insbesondere zwischen 88° und 112° und insbesondere exakt 110° ist. In der Ruheposition ist der Abstandshebel 19 insbesondere im Wesentlichen vertikal orientiert. In der Ruheposition ist der Abstandshebel 19 innerhalb der Breite b des Tragteils 8 angeordnet, wie dies in Fig. 5 gezeigt ist. In der Ruheposition steht der Abstandshebel 19 in Breitenrichtung des Tragteils 8 nicht vor.

Der Abstandshebel 19 kann in der Ruheposition insbesondere an dem zweiten Anschlagelement 31 anliegen. Es ist auch denkbar, dass der Abstandshebel 19 in der Ruheposition beabstandet von dem Tragteil 8 und/oder beabstandet von dem zweiten Anschlagelement 31 angeordnet ist.

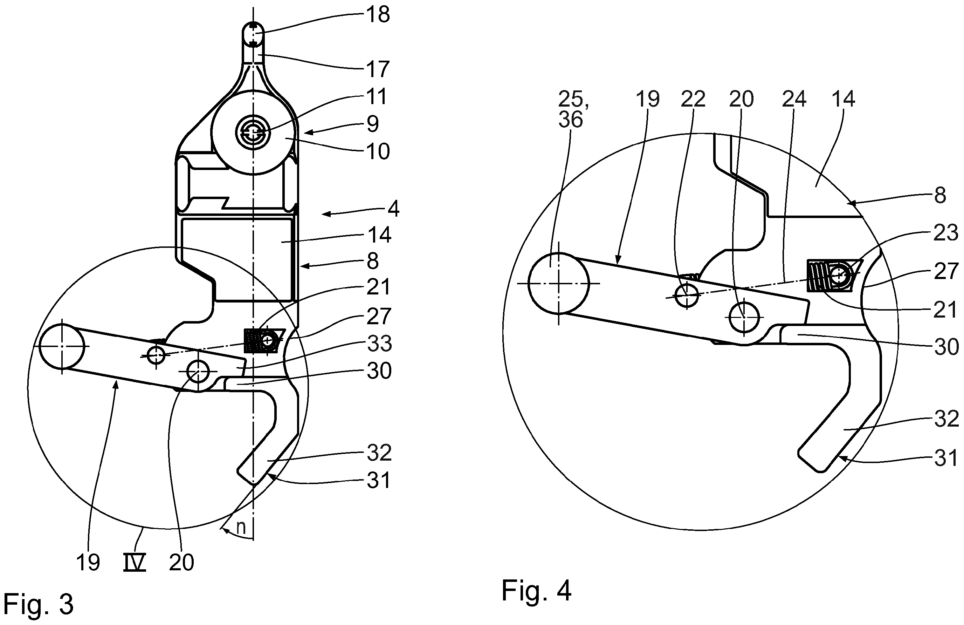

Wie sich insbesondere aus Fig. 4 und Fig. 6 ergibt, bilden die Anlenkpunkte 22, 23 und die Schwenkachse 20 in einer zur Schwenkachse 20 senkrechten Ebene sowohl in der Ruheposition als auch in der Arbeitsposition die Eckpunkte eines Ruhepositionsdreiecks bzw. eines Arbeitspositionsdreiecks. Die senkrecht zur Schwenkachse orientierte Ebene entspricht jeweils der Zeichenebene in Fig. 4 und Fig. 6. Das Kraftspeicherelement 21 befindet sich sowohl in der Ruheposition als auch in der Arbeitsposition jeweils in einer Übertotpunktlage. Die Totpunktlage ist in einer Schwenkposition gegeben, in der die Schwenkachse 20 auf der Wirkungslinie 24 liegt. In dieser Schwenkposition ist die von dem Kraftspeicherelement 21 verursachte Rückstellkraft maximal. Der Abstandshebel 19 ist sowohl in der Ruheposition als auch in der Arbeitsposition jeweils stabil, insbesondere selbstsichernd am Tragteil 8 angeordnet.

An dem Abstandshebel 19 und/oder am Tragteil 8 sind die Anschlagelemente 30, 31 vorgesehen. Die Anschlagelemente 30, 31 verhindern, dass der Abstandshebel 19, insbesondere aus der Übertotpunktlage heraus über die Arbeitsposition bzw. über die Ruheposition hinaus gegenüber dem Tragteil 8 verschwenkt wird.

Das erste Anschlagelement 30 dient zum Sichern der Übertotpunktlage in der Arbeitsposition. Das erste Anschlagelement 30 ist an dem Tragteil 8 als seitliche Verdickung integriert ausgeführt. Das erste Anschlagelement 30 erstreckt sich entlang der Schwenkachse 20, also in Querrichtung 29 des Tragteils 8. Das erste Anschlagelement 30 kann auch als zusätzliches Bauteil seitlich an dem Tragteil 8 montiert sein.

Das zweite Anschlagelement 31 ist durch ein in Förderrichtung 3 hinteres Ende des Rahmens 32 der Aufnahme 13 gebildet. Das zweite Anschlagelement 31 ist an dem Tragteil 8 integriert ausgeführt. Ein separates Bauelement ist für das zweite Anschlagelement 31 entbehrlich.

Die Anschlagelemente 30, 31 sind jeweils in einem Endbereich des C-förmigen Rahmens 32 gemäß Fig. 4 angeordnet.

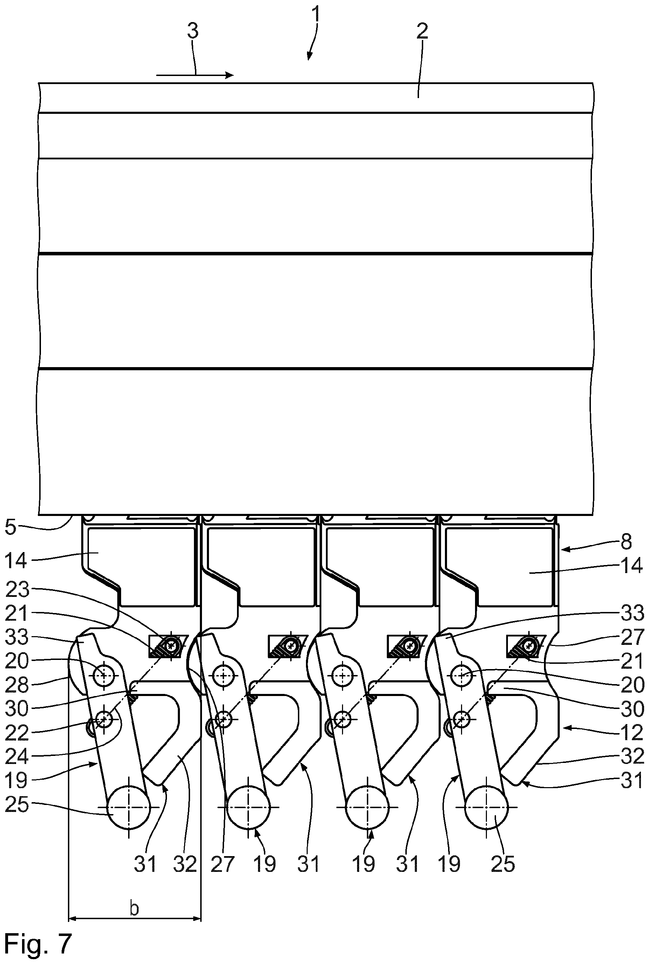

An einer der Anlagefläche 27 gegenüberliegenden Seite, insbesondere im Bereich der Schwenkachse 20, weist das Tragteil 8 eine in Breitenrichtung orientierte Erhebung 28 auf. Die Erhebung weist insbesondere eine Außenkontur auf, die der Negativkontur der Anlagefläche 27 entspricht. Bei einer Anordnung der Halteelemente 4 in der Ruheposition gemäß Fig. 7, kann ein Halteelement 4 mit der Erhebung 28 in der muldenförmigen Anlagefläche 27 des benachbarten Halteelements 4 stabil und platzsparend angeordnet sein.

Nachfolgend wird die Funktion der Halteelemente 4, insbesondere der Abstandshebel 19 näher erläutert.

Ausgehend von der Anordnung des Abstandshebels 19 an dem Tragteil 8 in der Ruheposition gemäß Fig. 5 bis 7 können Gegenstände mit den Halteelementen 4 entlang der Förderschiene 2 in der Hängeförderanlage 1 gefördert werden. Insbesondere in im Wesentlichen horizontal angeordneten Förder- und/oder Stauabschnitten der Hängeförderanlage 1, in welchen die Gegenstände hängend gefördert und allenfalls an im Wesentlichen horizontal orientierten Stauabschnitten aufgestaut werden, können die Halteelemente 4, wie in Fig. 7 gezeigt, platzsparend und dicht nebeneinander angeordnet sein.

Insbesondere im Bereich von Stauabschnitten mit gegenüber der Horizontalrichtung nach unten geneigt angeordneten Förderschienen 2, werden die Abstandshebel 19 der Halteelemente 4 an dem Tragteil 8 von der Ruheposition in die in Fig. 1 bis 4 dargestellte Arbeitsposition verschwenkt. Insbesondere werden die Halteelemente 4 ausgehend von Fig. 7 um etwa 90° im Uhrzeigersinn um Schwenkachse 20 verschwenkt. In der Arbeitsposition ist ein Halteelement 4 mit dem Abstandshebel 19 an dem in Förderrichtung 3 stromaufwärts angeordneten, benachbarten Halteelement 4, also dem nacheilenden Halteelement 4, zuverlässig abgestützt. Dadurch, dass der Abstandshebel 19 mit der Kontaktfläche 26 an der Anlagefläche 27 des benachbarten Halteelements 4 angeordnet ist, ist die Position besonders stabil. Ein unbeabsichtigtes Verlagern des Abstandshebels 19 ist insbesondere auch wegen der selbstsichernden Anordnung in der Arbeitsposition ausgeschlossen.

Dadurch, dass der Abstandshebel 19 im Endbereich 25 in Querrichtung 29 an der Förderschiene 2 vorsteht, kann der Abstandshebel 19 mittels eines nicht näher erläuterten Mechanismus, insbesondere automatisiert, von der Ruheposition in die Arbeitsposition ausgeschwenkt werden. Wenn die Halteelemente 4 entlang der Hängeförderanlage 1 den geneigten Stauabschnitt verlassen und insbesondere entlang eines im Wesentlichen horizontal orientierten Förderabschnitts der Hängeförderanlage 1 gefördert werden, können die Abstandshebel 21 mit einem entsprechenden Klappmechanismus beaufschlagt und wieder zurück in die Ruheposition geschwenkt werden.

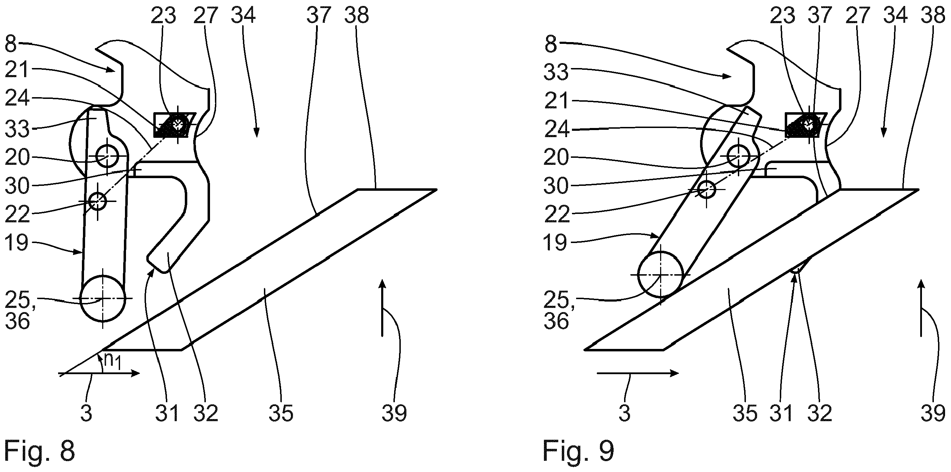

Nachfolgend wird anhand von Fig. 8 bis 12 der Aufbau einer Öffnungsstation 34 der Hängeförderanlage 1 näher erläutert.

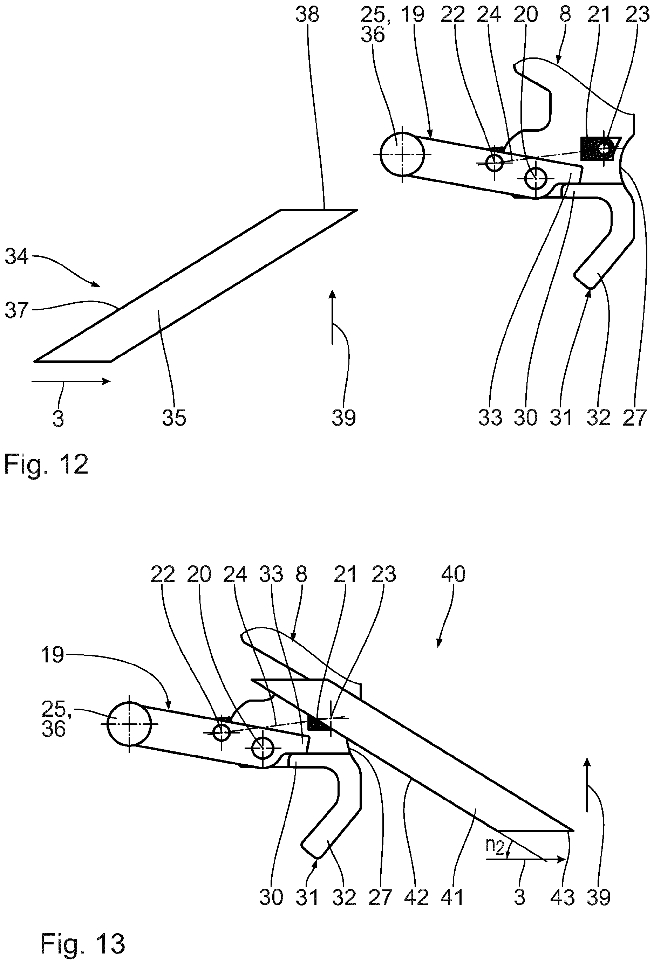

Die Öffnungsstation 34 ist Teil der Hängeförderanlage 1. Die Öffnungsstation 34 dient zum Öffnen des Abstandshebels 19, also zum Überführen des Abstandshebels 19 in die in Fig. 12 dargestellte Arbeitsposition.

Die Öffnungsstation 34 umfasst ein Öffnungselement 35, das als ortsfeste Kufe ausgeführt ist. Insbesondere ist das Öffnungselement 35 mit der in Fig. 8 bis 12 nicht dargestellten Förderschiene verbunden, insbesondere daran befestigt. Das Öffnungselement 35 ist bezogen auf die Querrichtung 29, die senkrecht zur Zeichenebene gemäß Fig. 8 bis 12 orientiert ist, neben dem Tragteil 8 angeordnet. Der seitliche Abstand des Öffnungselements 35 entlang der Querrichtung 29 ist derart gewählt, dass bei einem Fördern des Tragteils 8 entlang der Förderrichtung 3 der Abstandshebel 19 mit einem seitlich vorstehenden Abschnitt 36 des Endbereichs 25 mit dem Öffnungselement 35 in Kontakt kommt.

Das Öffnungselement 35 weist eine dem seitlichen Abschnitt 36 zugewandte Führungsfläche 37 auf. Die Führungsfläche 37 weist gemäß einer Vertikalebene, die senkrecht zur Querrichtung 29 orientiert ist und der Zeichenebene gemäß Fig. 8 entspricht, eine Vertikalkomponente auf. Die Führungsfläche 37 ist quer zur Förderrichtung 3 orientiert. Die Führungsfläche 37 ist entlang der Förderrichtung 3 ansteigend ausgeführt. Gemäß den gezeigten Ausführungsbeispielen ist die Führungsfläche 37 gegenüber der Förderrichtung 3 mit einem ersten Neigungswinkel n₁ ausgeführt. Der erste Neigungswinkel n₁ beträgt insbesondere zwischen 10° und 50°, insbesondere zwischen 15° und 45°, insbesondere zwischen 20° und 40°, insbesondere zwischen 25° und 35° und insbesondere 30°.

Die Führungsfläche 37 kann auch nichtlinear, insbesondere gekrümmt, insbesondere entlang der Förderrichtung 3 progressiv oder degressiv gekrümmt ausgeführt sein.

Das Öffnungselement 35 weist ein oberes Ende 38 auf, das die Führungsfläche 37 begrenzt. Das obere Ende 38 bildet bezüglich der Vertikalrichtung 39 den höchsten Punkt des Öffnungselements 35. Das obere Ende 38 ist entlang der Vertikalrichtung 39 derart angeordnet, dass der Abstandshebel 19, wenn er mit dem Endbereich 25 an dem oberen Ende 38 anliegt, sich in einer Übertotpunktlage befindet, die der Abstandsposition des Abstandshebels 19 zugewandt ist.

Nachfolgend wird die Funktion der Öffnungsstation 34 anhand der Fig. 8 bis 12 näher erläutert.

Das Tragteil 8 befindet sich gemäß Fig. 8 in einer Zwischenposition zwischen der Standardposition und der Arbeitsposition. Die gezeigte Position des Abstandshebels 19 ist näher der Standardposition, wobei der Abstandshebel 19 von dem zweiten Anschlagelement 31 beabstandet angeordnet ist. Wenn das Tragteil 8 entlang der Förderrichtung 3 gefördert wird, kommt der Abstandshebel 19 mit dem seitlichen Abschnitt 36 des Endbereichs 25 in Kontakt mit dem Öffnungselement 35. Durch die weitere Förderung des Tragteils 8 entlang der Förderrichtung 3 wird der Abstandshebel 19 durch das Öffnungselement 35 zwangsgeführt und entgegen der Federkraft des Kraftspeicherelements 21 in Richtung der Abstandsposition verlagert, also geöffnet. Gemäß Fig. 8 bis 12 wird der Abstandshebel 19 bezüglich der Schwenkachse 20 im Uhrzeigersinn, insbesondere von dem zweiten Anschlagelement 31 weg, geschwenkt.

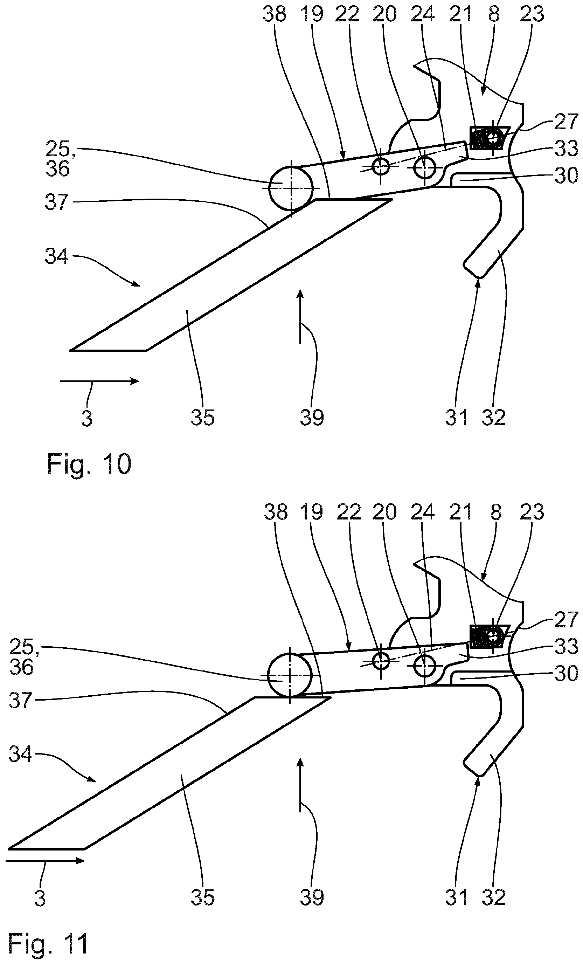

Durch weitere Förderung des Tragteils 8 entlang der Förderrichtung 3 wird der Abstandshebel 19 immer weiter verschwenkt. Die Zwangsführung des Abstandshebels 19 endet, wenn der Endbereich 25 die Führungsfläche 37 verlässt und am oberen Ende 38 des Öffnungselements 35 angeordnet ist. Da sich der Abstandshebel 19 zu diesem Zeitpunkt bereits in der Übertotpunktlage, die der Abstandsposition zugewandt ist, angeordnet ist, schwenkt der Abstandshebel 19 von der in Fig. 11 aus gezeigten Anordnung infolge der von dem Kraftspeicherelement 21 verursachten Federkraft in die in Fig. 12 gezeigte Abstandsposition. Die Schwenkbewegung des Abstandshebels 19 wird dadurch begrenzt, dass der Abstandshebel 19 mit dem Überstandsabschnitt 33 an dem ersten Anschlagelement 30 anliegt. Der Abstandshebel 19 befindet sich in der Abstandsposition.

Insbesondere ermöglicht die Öffnungsstation 34 mit dem passiv ausgeführten Öffnungselement 35 ein automatisiertes Umklappen des Abstandshebels 19 in die Abstandsposition. Das Überführen des Abstandshebels 19 in die Abstandsposition gemäß Fig. 12 ist unkompliziert und zuverlässig möglich.

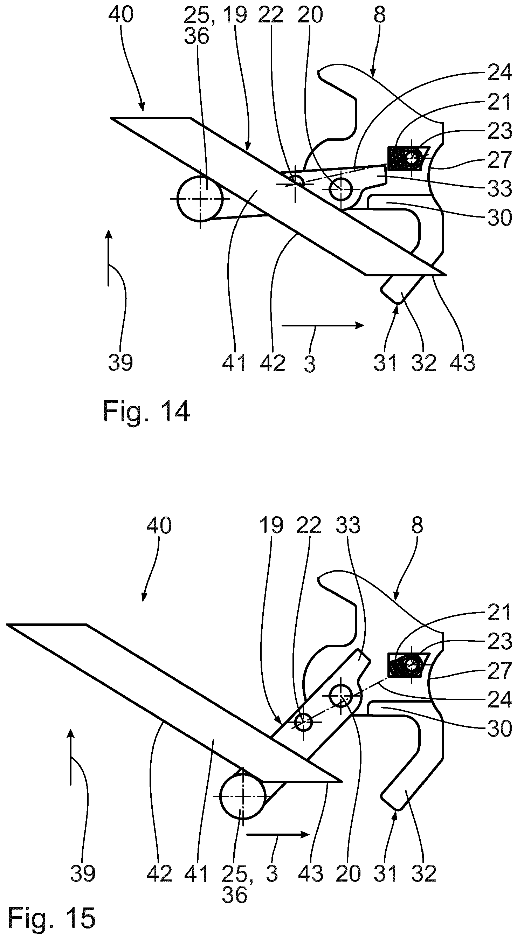

Nachfolgend wird anhand von Fig. 13 bis Fig. 17 eine Schließstation 40 näher erläutert.

Die Schließstation 40 ist Teil der Hängeförderanlage 1. Die Schließstation 40 weist ein Schließelement 41 auf, das ortsfest in der Hängeförderanlage 1 angeordnet ist. Das Schließelement 41 ist insbesondere an der in Fig. 13 bis 17 nicht dargestellten Förderschiene befestigt. Das Schließelement 41 ist insbesondere als ortsfeste Kufe ausgeführt.

Das Schließelement 41 ist entlang der Querrichtung 29 neben der Führungsschiene 2 angeordnet. Das Schließelement 41 ist entlang der Querrichtung 29 derart an der Hängeförderanlage 1 angeordnet, dass der Abstandshebel 19 bei seiner Verlagerung entlang der Förderrichtung 3 mit dem seitlichen Abschnitt 36 des Endbereichs 25 mit dem Schließelement 41 in Kontakt kommt.

Das Schließelement 41 weist eine Schließfläche 42 auf, an der der Abstandshebel 19 mit dem seitlichen Abschnitt 36 des Endbereichs 25 anliegen kann. Die Schließfläche 42 bewirkt eine Zwangsführung des Abstandshebels 19 bei einer Förderung des Tragteils 8 entlang der Förderrichtung 3. In einer Vertikalebene, die senkrecht zur Querrichtung 29 orientiert ist und die der Zeichenebene gemäß Fig. 13 entspricht, weist die Schließfläche 42 eine Kontur auf, die eine entgegen der Vertikalrichtung 39 orientierte Vertikalkomponente aufweist. Die Kontur der Schließfläche 42 ist bezogen auf die Förderrichtung 3 fallend orientiert.

Gemäß dem gezeigten Ausführungsbeispiel ist die Schließfläche 42 gegenüber der Förderrichtung 3 als linear geneigte Fläche mit einem zweiten Neigungswinkel n₂ ausgeführt. Die Schließfläche 42 kann auch uneben ausgeführt sein und eine Kontur aufweisen, die gegenüber der Förderrichtung 3 nicht linear, insbesondere gekrümmt, insbesondere degressiv oder progressiv gekrümmt ausgeführt ist.

Das Schließelement 41 weist ein unteres Ende 43 auf. Das untere Ende 43 begrenzt die Schließfläche 42 nach unten, also entgegen der Vertikalrichtung 39. Das untere Ende 43 ist insbesondere derart angeordnet, dass der Abstandshebel 19, wenn er mit dem Endbereich 25 an dem unteren Ende 43 anliegt, sich in einer Übertotpunktlage befindet, die der Standartposition zugewandt ist.

Nachfolgend wird anhand von Fig. 13 bis 17 die Funktion der Schließstation 40 näher erläutert.

Ausgehend von der Anordnung in Fig. 13, in der sich der Abstandshebel 19 in der geöffneten Abstandsposition befindet, wird das Tragteil 8 entlang der Förderrichtung 3 gefördert. Der Abstandshebel 19 kommt mit dem seitlichen Abschnitt 36 des Endbereichs 25 mit der Schließfläche 42 des Schließelements 41 in Kontakt. Eine weitere Verlagerung des Tragteils 8 entlang der Förderrichtung 3 bewirkt eine Zwangsführung des Abstandshebels 19. Der Abstandshebel 19 wird von der Schließfläche 42 bezüglich der Schwenkachse 20 entgegen der Federkraft des Kraftspeicherelements 21 im Gegenuhrzeigersinn gemäß Fig. 13 bis 17 geschwenkt.

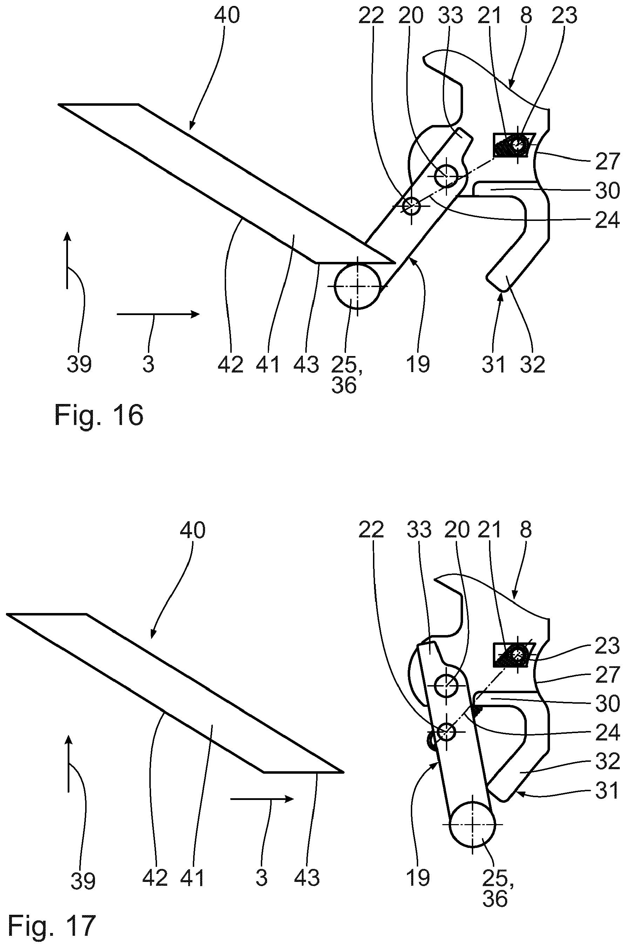

Wenn der Abstandshebel 19 mit dem Endbereich 25 gemäß Fig. 16 am unteren Ende 43 des Schließelements 41 angeordnet ist, befindet sich der Abstandshebel 19 bereits in einer der Standardposition zugewandten Übertotpunktlage. Von dort aus schwenkt der Abstandshebel 19 infolge der Federkraft selbsttätig, also ohne weitere Zwangsführung, in die in Fig. 17 gezeigte Standardposition.

Die Schließstation 40 mit dem passiv ausgeführten Schließelement 41 ermöglicht ein zuverlässiges und unkompliziertes Verlagern des Abstandshebels 19 in die in Fig. 17 gezeigte Standardposition. Der Abstandshebel kann mittels der Schließstation 40 unmittelbar in die Standardposition geklappt werden.

## Patentansprüche

1. Halteelement zum haltenden Fördern eines Gegenstands entlang einer Förderschiene (2), wobei das Halteelement (4) umfasst
a. ein eine Breite (b) aufweisendes Tragteil (8) mit
i. einem Mitnahmeelement zum Mitnehmen des Tragteils (8) von einem Antriebselement,
ii. einer Aufnahme (13) zum Aufnehmen des zu fördernden Gegenstands,
b. einen schwenkbar an dem Tragteil (8) angelenkten Abstandshebel (19), der zwischen einer Ruheposition, in der der Abstandshebel (19) innerhalb der Breite (b) des Tragteils (8) angeordnet ist, und einer Arbeitsposition verlagerbar ist, in der der Abstandshebel (19) in Breitenrichtung des Tragteils (8) vorsteht.

2. Halteelement gemäß Anspruch 1, **dadurch gekennzeichnet, dass** der Abstandshebel (19) in der Ruheposition und in der Arbeitsposition jeweils stabil am Tragteil (8) angeordnet ist.

3. Halteelement gemäß einem der vorstehenden Ansprüche, **gekennzeichnet durch** ein Kraftspeicherelement (21), das an einem ersten Anlenkpunkt (22) an dem Abstandshebel (19) und an einem zweiten Anlenkpunkt (23) an dem Tragteil (8), insbesondere jeweils schwenkbar, angelenkt ist.

4. Halteelement gemäß Anspruch 3, **dadurch gekennzeichnet, dass** das Kraftspeicherelement (21) ein Federelement, insbesondere eine Schraubenfeder, ist.

5. Halteelement gemäß Anspruch 4, **dadurch gekennzeichnet, dass** das Federelement in der Ruheposition und in der Arbeitsposition jeweils in einer Übertotpunktlage angeordnet ist.

6. Halteelement gemäß einem der Ansprüche 3 bis 5, **dadurch gekennzeichnet, dass** die Anlenkpunkte (22, 23) und die Schwenkachse (20) in einer Ebene senkrecht zur Schwenkachse (20) in der Ruheposition und in der Arbeitsposition die Eckpunkte eines Ruhepositionsdreiecks bzw. eines Arbeitspositionsdreiecks bilden.

7. Halteelement gemäß einem der vorstehenden Ansprüche, **gekennzeichnet durch** mindestens eine Laufrolle (10), die drehbar um eine Drehachse (11) an dem Tragteil (8) angelenkt ist.

8. Halteelement gemäß einem der vorstehenden Ansprüche, **dadurch gekennzeichnet, dass** die Aufnahme (13) als, insbesondere geschlossene, Öffnung ausgeführt ist, die insbesondere quer und insbesondere senkrecht zur Förderrichtung (3) orientiert ist.

9. Halteelement gemäß einem der vorstehenden Ansprüche, **dadurch gekennzeichnet, dass** das Tragteil (8) ein Identifizierungselement (14), insbesondere einen RFID-Chip, aufweist.

10. Halteelement gemäß einem der vorstehenden Ansprüche, **dadurch gekennzeichnet, dass** das Tragteil (8) einen Anlagefläche (27) aufweist, die für ein definiertes Anliegen des Abstandshebels (19) eines anderen Halteelements (4) dient.

11. Halteelement gemäß Anspruch 10, **dadurch gekennzeichnet, dass** der Abstandshebel (19) in einem freien Endbereich (25) eine Kontaktfläche (26) zum Anliegen an der Anlagefläche (27) des benachbarten Halteelements (4) aufweist.

12. Hängeförderanlage mit mindestens einer Förderschiene (2), einem Antriebselement, das insbesondere in der Förderschiene (2) integriert angeordnet ist, und mehreren Halteelementen (4).

13. Hängeförderanlage gemäß Anspruch 12, **gekennzeichnet durch** eine Öffnungsstation (34) zum Überführen des Abstandshebels (19) in eine Abstandsposition, wobei die Öffnungsstation (34) insbesondere ein Öffnungselement (35) aufweist, das unmittelbar mit dem Abstandshebel (19) zusammenwirkt.

14. Hängeförderanlage gemäß Anspruch 12 oder 13, **gekennzeichnet durch** eine Schließstation (40) zum Überführen des Abstandshebels (19) in eine Standardposition, wobei die Schließstation (40) insbesondere ein Schließelement (41) aufweist, das unmittelbar mit dem Abstandshebel (19) zusammenwirkt.
